# EUROPEAN PATENT APPLICATION

(11) **EP 4 770 265 A1**
(43) Date of publication of application: **01.07.2026**
(21) Application number: 24872287.8
(22) Date of filing: 25.09.2024
(51) Int. Cl.: H04W 76/40, H04W 4/06, H04W 36/08, H04W 72/231

(54) **COMMUNICATION METHOD AND USER DEVICE**

(30) Priority: 25.09.2023 US 202363540282 P
(71) Applicant: KYOCERA Corporation, Kyoto-shi, Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2024/034207
(87) International publication number: WO 2025/070501

(57) **Abstract**

A communication method executed by a user equipment in a mobile communication system for providing a multicast broadcast service (MBS) includes: receiving, from a network node, a threshold value configuration for configuring a threshold value to be compared with reception quality upon reception of a multicast session in a radio resource control (RRC) inactive state, the threshold value being used to determine whether to start an RRC connection resume; applying the threshold value configuration such that the reception quality is compared with the threshold value in the RRC inactive state; and stopping applying the threshold value configuration in response to satisfying a predetermined condition related to the multicast reception in the RRC inactive state.

## Description

### TECHNICAL FIELD

The present disclosure relates to a communication method used in a mobile communication system and to a user equipment.

### BACKGROUND OF INVENTION

In the 3rd generation partnership project (3GPP) (registered trademark; the same applies hereinafter), a technical specification of new radio (NR), which is a fifth-generation (5G) radio access technology, is defined. NR has features such as high speed, large capacity, high reliability, and low latency as compared to Long Term Evolution (LTE) that is a radio access technology of the fourth generation (4G). The 3GPP has defined technical specifications of multicast/broadcast services (MBS) of SG/NR.

In 3GPP Release 17, MBS multicast reception (i.e., multicast reception) is possible only for a user equipment in a radio resource control (RRC) connected state (see, for example, Non-Patent Document 1). On the other hand, in 3GPP Release 18, technical specifications are scheduled to be extended so that a user equipment in an RRC inactive state can perform multicast reception.

### CITATION LIST

### NON-PATENT LITERATURE

Non-Patent Literature 1: 3GPP Technical Specification: TS 38.300 V17.5.0

### SUMMARY

A communication method according to a first aspect is a communication method executed by a user equipment in a mobile communication system for providing a multicast broadcast service (MBS), the communication method including: receiving, from a network node, a threshold value configuration for configuring a threshold value to be compared with reception quality upon reception of a multicast session in a radio resource control (RRC) inactive state, the threshold value being used to determine whether to start an RRC connection resume; and applying the threshold value configuration such that the reception quality is compared with the threshold value when performing the multicast reception in the RRC inactive state.

A user equipment according to a second aspect is a user equipment used in a mobile communication system for providing a multicast broadcast service (MBS), the user equipment including: a receiver configured to receive, from a network node, a threshold value configuration for configuring a threshold value to be compared with reception quality upon reception of a multicast session in a radio resource control (RRC) inactive state, the threshold value being used to determine whether to start an RRC connection resume; and a controller configured to apply the threshold value configuration such that the reception quality is compared with the threshold value when performing the multicast reception in the RRC inactive state.

### BRIEF DESCRIPTION OF THE DRAWINGS

FIG. 1 is a diagram illustrating a configuration example of a mobile communication system according to an embodiment.
FIG. 2 is a diagram illustrating a configuration example of a user equipment (UE) according to an embodiment.
FIG. 3 is a diagram illustrating a configuration example of a gNB (network node) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating an overview of an operation of a UE according to an embodiment.
FIG. 7 is a diagram illustrating an overview of an operation in accordance with a first operation pattern of the embodiment.
FIG. 8 is a diagram illustrating an example of the operation in accordance with the first operation pattern of the embodiment.
FIG. 9 is a diagram illustrating an overview of an operation in accordance with a second operation pattern of the embodiment.
FIG. 10 is a diagram illustrating an example of the operation in accordance with the second operation pattern of the embodiment.
FIG. 11 is a diagram illustrating an overview of an operation in accordance with a third operation pattern of the embodiment.
FIG. 12 is a diagram illustrating an example of the operation in accordance with the third operation pattern of the embodiment.

### DESCRIPTION OF EMBODIMENTS

According to an embodiment, a mobile communication system is described with reference to the drawings. In the description of the drawings, the same or similar parts are denoted by the same or similar reference signs.

### (1) System Configuration Example

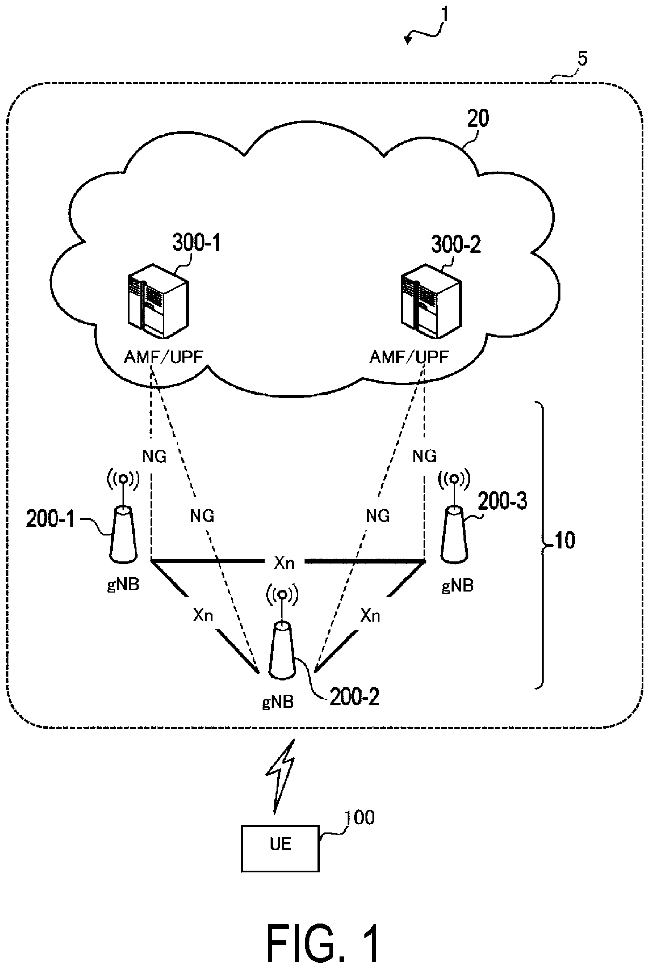

FIG. 1 is a diagram illustrating a configuration example of a mobile communication system 1 according to the embodiment. The mobile communication system 1 complies with the 5th Generation System (5GS) of the 3GPP standard. The description below takes the 5GS as an example, but Long Term Evolution (LTE) system may be at least partially applied to the mobile communication system. Alternatively, a sixth generation (6G) system may be at least partially applied to the mobile communication system.

The mobile communication system 1 includes User Equipment (UE) 100, a 5G radio access network (Next Generation Radio Access Network (NG-RAN)) 10, and a 5G Core Network (5GC) 20. Hereinafter, the NG-RAN 10 may be simply referred to as a RAN 10. The 5GC 20 may be simply referred to as a core network (CN) 20. The RAN 10 and the CN 20 configure a network 5 of the mobile communication system 1.

The UE 100 is a mobile wireless communication apparatus. The UE 100 may be any apparatus as long as the UE 100 is used by a user. Examples of the UE 100 include a mobile phone terminal (including a smartphone) or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes a base station 200, which is a type of network node (referred to as a gNB in a 5G system). The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter, simply referred to as a "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

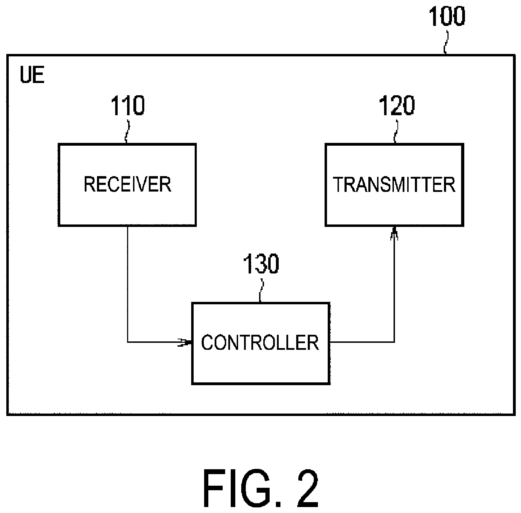

FIG. 2 is a diagram illustrating a configuration example of the UE 100 (user equipment) according to the embodiment. The UE 100 includes a receiver 110, a transmitter 120, and a controller 130. The receiver 110 and the transmitter 120 constitute a wireless communicator that performs wireless communication with the gNB 200.

The receiver 110 performs various receptions under the control of the controller 130. The receiver 110 includes an antenna and a reception device. The reception device converts a radio signal or a terahertz wave signal received through the antenna into a baseband signal (a reception signal) and outputs the resulting signal to the controller 130.

The transmitter 120 performs various transmissions under the control of the controller 130. The transmitter 120 includes an antenna and a transmission device. The transmission device converts a baseband signal (a transmission signal) output by the controller 130 into a radio signal or a terahertz wave signal and transmits the resulting signal through the antenna.

The controller 130 performs various controls and processes in the UE 100. Such processing includes processing of respective layers to be described later. The operations of the UE 100 described above and below may be operations under the control of a controller 230. The controller 130 includes at least one processor and at least one memory. The memory stores a program to be executed by the processor and information to be used for processing in the processor. The processor may include a baseband processor and a central processing unit (CPU). The baseband processor performs modulation and demodulation, coding and decoding, and the like of a baseband signal. The CPU executes the program stored in the memory to thereby perform various types of processing.

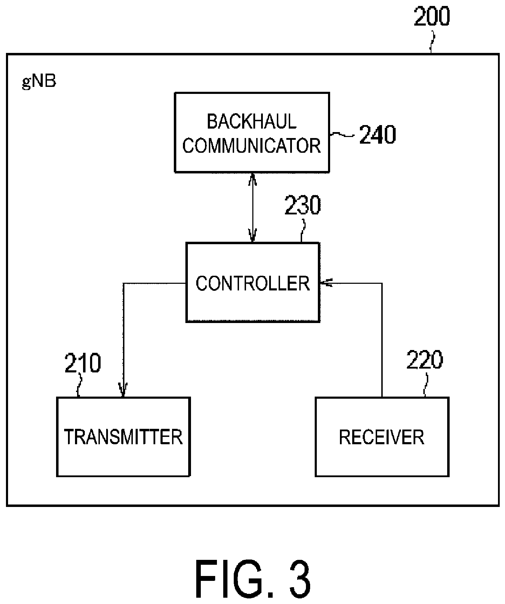

FIG. 3 is a diagram illustrating a configuration example of a gNB 200 (network node) according to the embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various transmissions under the control of the controller 230. The transmitter 210 includes an antenna and a transmission device. The transmission device converts a baseband signal (a transmission signal) output by the controller 230 into a radio signal or a terahertz wave signal and transmits the resulting signal through the antenna.

The receiver 220 performs various types of reception under control of the controller 230. The receiver 220 includes an antenna and a reception device. The reception device converts a radio signal or a terahertz wave signal received through the antenna into a baseband signal (a reception signal) and outputs the resulting signal to the controller 230.

The controller 230 performs various types of control and processing in the gNB 200. Such processing includes processing of respective layers to be described later. The operations of the gNB 200 described above and below may be also performed under the control of the controller 230. The controller 230 includes at least one processor and at least one memory. The memory stores a program to be executed by the processor and information to be used for processing in the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface which is an inter-base station interface. The backhaul communicator 240 is connected to the AMF/UPF 300 via an NG interface which is an interface between a base station and the core network. Note that the gNB 200 may include a Central Unit (CU) and a Distributed Unit (DU) (i.e., functions are divided), and both units may be connected via an F1 interface that is a fronthaul interface.

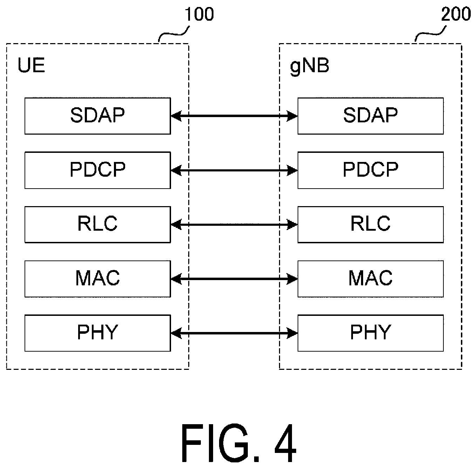

FIG. 4 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 performs blind decoding of the PDCCH by using a radio network temporary identifier (RNTI) and acquires a successfully decoded DCI as a DCI addressed to the UE. Cyclic redundancy code (CRC) parity bits scrambled by an RNTI are added to DCI transmitted from the gNB 200.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

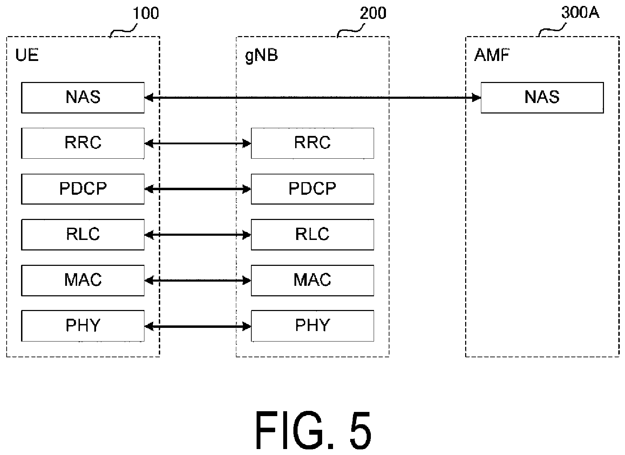

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When connection (RRC connection) is established between RRC of the UE 100 and RRC of the gNB 200, the UE 100 is in an RRC connected state. When connection (RRC connection) is not established between the RRC of the UE 100 and the RRC of the gNB 200, the UE 100 is in an RRC idle state. When the connection between the RRC of the UE 100 and the RRC of the gNB 200 is suspended, the UE 100 is in an RRC inactive state.

The NAS layer (also simply referred to as "NAS"), which is located above the RRC layer, performs session management, mobility management, and the like. NAS signaling is transmitted between the NAS layer of the UE 100 and the NAS layer of an AMF 300A. The UE 100 includes an application layer other than the protocol of the radio interface. The layer below the NAS layer is referred to as an AS layer (also simply referred to as "AS").

### (2) Overview of MBS

The mobile communication system 1 can perform delivery with high resource efficiency by using the multicast/broadcast service (MBS).

### (2.1) MBS Broadcast

In a case of the broadcast communication services (also referred to as "MBS broadcast"), the same service and the same specific content data are provided simultaneously to every UE 100 in a geographic area. That is, every UE 100 in the broadcast service area is permitted to receive the data. The broadcast communication services are delivered to the UE 100 using a broadcast session that is a type of MBS session. The UE 100 can receive the broadcast session in any state of the RRC idle state, the RRC inactive state, and the RRC connected state.

Point-to-Multipoint (PTM) delivery is applied to the broadcast communication service. For the PTM transmission, the gNB 200 delivers a single copy of an MBS packet to a set (group) of a plurality of UEs 100. For example, the gNB 200 schedules a group-common PDSCH scrambled by a group RNTI (G-RNTI), which is a group-common RNTI, by using a group-common PDCCH having a CRC scrambled by the G-RNTI.

For the broadcast communication service, the UE 100 receives a broadcast session in the following procedure. First, the UE 100 receives system information block type 20 (SIB20) from the gNB 200. The SIB20 includes a configuration of a multicast control channel (MCCH), which is a type of logical channel. Second, the UE 100 receives the MCCH from the gNB 200 based on the SIB20. The MCCH includes a PTM configuration. The PTM configuration transmits a configuration for a multicast traffic channel (MTCH) (MTCH configuration), which is a type of logical channel, and a configuration of a broadcast multicast radio bearer (MRB), which is an MRB for broadcast session. The information transmitted by the MCCH may be referred to as MBS broadcast control information. Third, the UE 100 receives the MTCH based on the MCCH. The MTCH transmits a broadcast session (specifically, MBS data belonging to the broadcast session).

An MCCH is a PTM downlink channel for transmitting MBS broadcast control information associated with one or more MTCHs from the network 5 to the UE 100. An MTCH is a PTM downlink channel for transmitting MBS data of either a multicast session or a broadcast session from the network 5 to the UE 100.

### (2.2) MBS Multicast

For a multicast communication service (also referred to as "MBS multicast"), the same service and the same specific content data are simultaneously provided to a specific UE set. That is, not every UE 100 in the multicast service area is permitted to receive data. The multicast communication service is delivered to the UE 100 using a multicast session that is a type of MBS session.

The UE 100 can receive a multicast session only after joining the multicast session (session join). The joining the multicast session may mean that the UE 100 is registered as being capable of receiving the multicast session in the network 5 (the CN 20).

For the multicast communication service, in 3GPP Release 17, only the UE 100 in the RRC connected state can receive a multicast session. On the other hand, in 3GPP Release 18, the specifications are extended such that the UE 100 in an RRC inactive state is also capable of receiving a multicast session.

### (2.2.1) Multicast Reception in RRC Connected State

The UE 100 in the RRC connected state can receive a multicast session (specifically, MBS data belonging to a multicast session) by using mechanisms such as Point-to-Point (PTP) delivery and/or Point-to-Multipoint (PTM) delivery.

For the multicast communication service, the UE 100 in the RRC connected state receives a multicast session in the following procedure. First, the UE 100 receives an RRC Reconfiguration message from the gNB 200. The RRC Reconfiguration message is a message transmitted on a dedicated control channel (DCCH). The RRC Reconfiguration message transmits a configuration for an MTCH for multicast session reception (MTCH configuration) and a configuration of a multicast MRB which is an MRB for multicast session. Second, the UE 100 receives an MTCH based on the RRC Reconfiguration message. The MTCH transmits a multicast session (specifically, MBS data belonging to the multicast session).

### (2.2.2) Multicast Reception in RRC inactive state

The UE 100 in the RRC inactive state may receive a multicast session (specifically, MBS data belonging to the multicast session) by using the mechanism of the PTM delivery.

For the multicast communication service, the UE 100 in the RRC inactive state can receive a multicast session in the following procedure. First, the UE 100 in the RRC inactive state receives a newly introduced system information block (also referred to as a "SIBx") from the gNB 200. SIBx includes a configuration of a newly introduced MCCH (also referred to as a "multicast MCCH"). Second, the UE 100 in the RRC inactive state receives a multicast MCCH based on SIBx from the gNB 200. The multicast MCCH includes a PTM configuration. The PTM configuration transmits a configuration regarding an MTCH for multicast session reception (MTCH configuration) and a configuration of a multicast inactive MRB which is an MRB for multicast session reception in the RRC inactive state (multicast inactive MRB configuration). The MTCH configuration may be included in the multicast inactive MRB configuration. Third, the UE 100 in the RRC inactive state receives an MTCH based on the multicast MCCH. The MTCH transmits a multicast session, specifically, MBS data belonging to the multicast session(that is, multicast data).

When the gNB 200 configures the UE 100 to receive a multicast session in the RRC inactive state, the gNB 200 can transmit the PTM configuration (multicast inactive MRB configuration) to the UE 100 using an RRC release message including a suspend configuration. In this case, when the UE 100 receives the RRC release message including the PTM configuration from the gNB 200, the UE 100 transitions to the RRC inactive state and performs reception of the multicast session (multicast reception) in the RRC inactive state.

### (2.2.3) Group Notification

In a case in which there temporarily is no data to transmit to the UE 100 in the activated multicast session, the gNB 200 may cause the UE 100 to transition to the RRC inactive state. When the multicast session is deactivated, the gNB 200 may cause the UE 100 to transition to the RRC idle state or the RRC inactive state.

The gNB 200 supporting the MBS notifies the UE 100 in the RRC idle state or the RRC inactive state by using a group notification mechanism when the multicast session is activated by the CN 20. The gNB 200 that supports MBS may perform a notification to the UE 100 in the RRC inactive state using a group notification mechanism when a multicast session has been activated and the gNB 200 has multicast session data to deliver.

Upon receiving the group notification, the UE 100 reconnects to the network 5 or resumes the connection to transition to the RRC connected state. The group notification is processed with a paging RNTI (P-RNTI) on the PDCCH, and a paging channel is monitored by the UE 100.

A paging message used for the group notification includes session identifiers (MBS session IDs) for paging all UEs 100 in the RRC idle state and the RRC inactive state that have joined the associated MBS multicast session. That is, the UE 100 is not individually paged.

When the UE 100 transitions to the RRC connected state, the UE 100 may stop monitoring the group notification associated with the particular multicast session. That is, the UE 100 stops checking the MBS session ID in the paging message. The UE 100 does not monitor the group notification in a case in which the UE 100 leaves the multicast session, the network 5 requests the UE 100 to leave the multicast session, or the network 5 releases the multicast session.

Note that the group notification may be performed on the MCCH or may be performed with an MCCH Change Notification. In the case of using the MCCH, the determination may be made depending on whether the MTCH configuration of the MBS session of interest is present in the MCCH. In a case of using the MCCH Change Notification, the group notification may be made in a predetermined bit of the DCI.

### (3) Operation of Mobile Communication System

An operation of the mobile communication system 1 according to an embodiment will be described.

### (3.1) Overview of Operation

In the embodiment, a scenario is assumed in which the UE 100 in the RRC inactive state starts the RRC connection resume (also referred to as "RRC Resume") in association with the multicast session (multicast reception). Here, a case in which the UE 100 in the RRC inactive state starts the RRC connection resume in association with the multicast session refers to a case in which reception quality upon multicast reception at the UE 100 (also referred to as "multicast reception quality") is poor, and/or a case in which the UE 100 needs to acquire multicast reception configuration (PTM configuration) from the gNB 200. In the embodiment, a scenario is mainly assumed in which the UE 100 in the RRC inactive state starts the RRC connection resume in response to poor reception quality upon multicast reception at the UE 100.

The case in which reception quality during multicast reception at the UE 100 is poor is a case in which reference signal received power (RSRP) measured for the serving cell by the UE 100 is worse than an RSRP threshold value configured for the UE 100 from the network 5, and/or a case in which reference signal received quality (RSRQ) measured for the serving cell by the UE 100 is worse than an RSRQ threshold value configured for the UE 100 by the network 5. However, the case in which reception quality during multicast reception at the UE 100 is poor is may be a case in which a bit error rate (BER) measured for a multicast session by the UE 100 exceeds a BER threshold value configured for the UE 100 by the network 5, and/or a case in which a block error rate (BLER) measured for the multicast session by the UE 100 exceeds a BLER threshold value configured for the UE 100 from the network 5.

Such a threshold value to be compared with the reception quality upon multicast reception (also referred to as a "reception quality threshold value") may be configured by PTM configuration (multicast reception configuration) on an MBS session basis using the RRC release message or the multicast MCCH (the multicast MCCH message) from the network 5 (gNB 200) to the UE 100. In the embodiment, when reception quality of a serving cell is worse than a threshold value configured by the network 5, the UE 100 that performs multicast reception in the RRC inactive state starts an RRC connection resume procedure. In the embodiment, it is mainly assumed that there are two types of signaling by which the reception quality threshold value can be configured for the UE 100, including an RRC release message and a multicast MCCH. The configuration of the reception quality threshold value (threshold value configuration) using the RRC release message is dedicated configuration in which an individual configuration is performed for each UE, and is also hereinafter referred to as a first threshold value configuration. The configuration of the reception quality threshold value (threshold value configuration) using the multicast MCCH is common configuration in which a configuration is commonly performed for a plurality of UEs, and is also hereinafter referred to as a second threshold value configuration.

The case in which the UE 100 needs to acquire the multicast reception configuration from the gNB 200 may be a case in which the UE 100 has not received the multicast reception configuration of the multicast session participated in by the UE 100 in the RRC release message, and the serving cell has not provided the multicast reception configuration via the multicast MCCH, that is, the UE 100 has received a paging message (group indication) indicating activation of the multicast session from the serving cell. The case in which the UE 100 needs to acquire the multicast reception configuration from the gNB 200 may be a case in which the UE 100 performs cell reselection from the first cell to the second cell, that is, the second cell (the reselected cell) does not provide the multicast reception configuration of the multicast session participated by the UE 100 via the multicast MCCH.

Incidentally, it is assumed that after the reception quality threshold value compared with reception quality upon multicast reception is configured for the UE 100, the UE 100 continues to apply the reception quality threshold value configuration (threshold value configuration) while performing the multicast reception in the RRC inactive state. However, the UE 100 continuously applying the same reception quality threshold value configuration may be inappropriate depending on, for example, a situation of the UE 100. In the embodiment, an operation that enables the UE 100 to appropriately handle the reception quality threshold value (threshold value configuration) will be described.

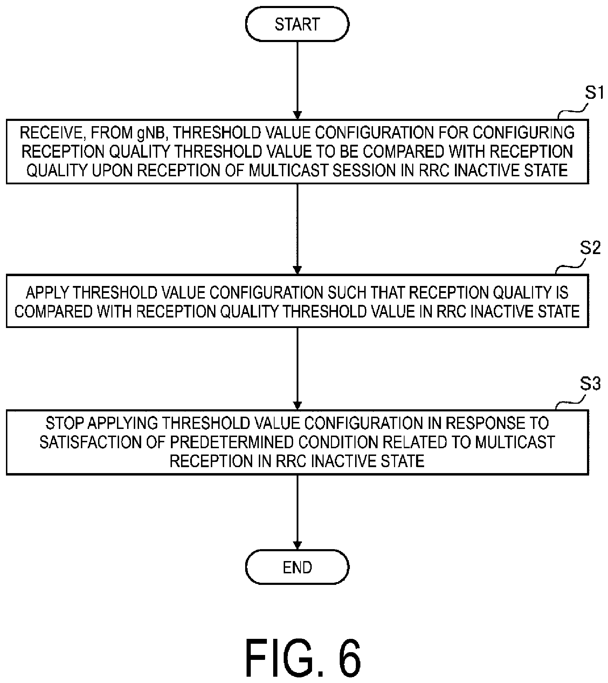

FIG. 6 is a diagram illustrating an overview of an operation of the UE 100 according to an embodiment. In the following description of the embodiment, it is assumed that the UE 100 has already participated in a certain multicast session. The multicast session is also referred to as multicast session in which the UE 100 has participated. "Having participated in the multicast session" may mean a state in which the UE 100 is registered in the network 5 (CN 20) as the UE 100 that receives the multicast session.

In step S1, the UE 100 receives, from the gNB 200, a threshold value configuration for configuring the reception quality threshold value (that is, the reception quality threshold value used to determine whether to start RRC connection resume) to be compared with the reception quality upon reception of the multicast session (the multicast session in which the UE 100 has participated) in the RRC inactive state. The threshold value configuration may be associated with the multicast session. The UE 100 holds the received threshold value configuration.

In step S2, the UE 100 applies the threshold value configuration received in step S1 such that, in the RRC inactive state, reception quality upon reception of the multicast session is compared with the reception quality threshold value. That is, the UE 100 performs processing for comparing the reception quality with the reception quality threshold value.

In step S3, the UE 100 stops applying the threshold value configuration received in step S1 in response to satisfying the predetermined condition related to the multicast reception in the RRC inactive state. That is, the UE 100 stops processing for comparing the reception quality with the reception quality threshold value. In the embodiment, it is mainly assumed that the UE 100 voluntarily stops applying the threshold value configuration in response to satisfying the predetermined condition. Here, "stopping applying the threshold value configuration" may mean temporarily stopping (suspending) use of the threshold value configuration (use of the reception quality threshold value) while holding the threshold value configuration. In this case, when the need to use the reception quality threshold value arises again, the UE 100 may resume use of the reception quality threshold value using the held threshold value configuration. Alternatively, "stopping applying the threshold value configuration" may mean discarding the threshold value configuration so that the reception quality threshold value configured by the threshold value configuration cannot be used. In this case, since the UE 100 does not need to hold the threshold value configuration, a memory capacity of the UE 100 can be saved.

As described above, in the embodiment, the UE 100 in the RRC inactive state stops applying the threshold value configuration in response to satisfying the predetermined condition related to the multicast reception. This enables the UE 100 to appropriately handle the reception quality threshold value.

The UE 100 that performs operation as illustrated in FIG. 6 includes a receiver 110 that receives, from the gNB 200, a threshold value configuration for configuring the reception quality threshold value to be compared with the reception quality upon reception of a multicast session in the RRC inactive state, and a controller 130 that applies the threshold value configuration such that reception quality is compared with the reception quality threshold value in the RRC inactive state. The controller 130 stops applying the threshold value configuration in response to satisfying a predetermined condition in the RRC inactive state.

In a first operation pattern of the embodiment, in step S1, the UE 100 receives an RRC release message including the threshold value configuration. Further, in the first operation pattern, the predetermined condition is execution of cell reselection. In step S3, the UE 100 discards the threshold value configuration received using the RRC release message in response to the execution of the cell reselection. Here, when the UE 100 performs cell reselection from the first cell to the second cell, a modulation and coding scheme (MCS) applied to the multicast transmission may differ between the first cell and the second cell. In that case, the threshold value configuration in the first cell may become inappropriate in the second cell. Therefore, in the first operation pattern, the UE 100 discards the threshold value configuration received using the RRC release message in the first cell in response to the execution of the cell reselection.

In a second operation pattern of the embodiment, in step S1, the UE 100 receives, in the RRC release message, the first threshold value configuration for configuring the reception quality threshold value, and receives, in the multicast MCCH, the second threshold value configuration for configuring the reception quality threshold value. The UE 100 may receive the RRC release message including the first threshold value configuration and the multicast MCCH including the second threshold value configuration at different timings. In step S2, when the UE 100 has received both the first threshold value configuration and the second threshold value configuration, the UE 100 applies one of the first threshold value configuration or the second threshold value configuration. In step S3, the UE 100 stops applying the other of the first threshold value configuration or the second threshold value configuration using, as the predetermined condition, that both the first threshold value configuration and the second threshold value configuration have been received. This enables the UE 100 to appropriately handle the reception quality threshold value even when different threshold value configurations are provided by different signaling.

In the second operation pattern, in step S2, the UE 100 may apply the first threshold value configuration in response to the reception of the first threshold value configuration. In step S3, the UE 100 may start applying the second threshold value configuration and stop applying the first threshold value configuration using, as the predetermined condition, that the UE 100 has received the second threshold value configuration after receiving the first threshold value configuration.

In the second operation pattern, in step S3, when reception quality corresponding to the reception quality threshold value configured by the second threshold value configuration is better than reception quality corresponding to the reception quality threshold value configured by the first threshold value configuration, the UE 100 may start applying the second threshold value configuration and stop applying the first threshold value configuration. This enables the UE 100 to apply the reception quality threshold value that facilitates starting the RRC connection resume procedure.

In the second operation pattern, the UE 100 may receive, from the gNB 200, designation information for designating which threshold configuration, among the first threshold value configuration and the second threshold value configuration, is to be applied by the UE 100. In step S2, when the UE 100 has received both the first threshold value configuration and the second threshold value configuration, the UE 100 may apply the threshold value configuration, among the first threshold value configuration and the second threshold value configuration, designated in accordance with the designation information. Accordingly, even when different threshold value configurations are provided by different signaling, the gNB 200 can designate any one of the threshold value configurations.

In a third operation pattern of the embodiment, in step S2, the UE 100 applies the threshold value configuration received in step S1 when performing the multicast reception. For example, when the multicast session in which the UE 100 has participated is activated and/or when the UE 100 is receiving the data (MTCH) of the multicast session, the UE 100 applies the threshold value configuration received in step S1. In step S3, the UE 100 does not apply the threshold value configuration received in step S1 when not performing the multicast reception. For example, the UE 100 may stop applying the threshold value configuration received in step S1 using, as a predetermined condition, that the multicast session in which the UE 100 has participated is not activated and/or that the UE 100 is not receiving the data (MTCH) of the multicast session. In this case, the UE 100 may discard the threshold value configuration. This can suppress unnecessary reception quality measurement and/or threshold value determination by the UE 100, thereby reducing processing load and power consumption of the UE 100.

### (3.2) Specific Operation Examples

As specific operation examples of the mobile communication system 1, first to third operation patterns will be described. The first to third operation patterns may be implemented independently, or two or more of the operation patterns may be implemented in combination.

### (3.2.1) First Operation Pattern

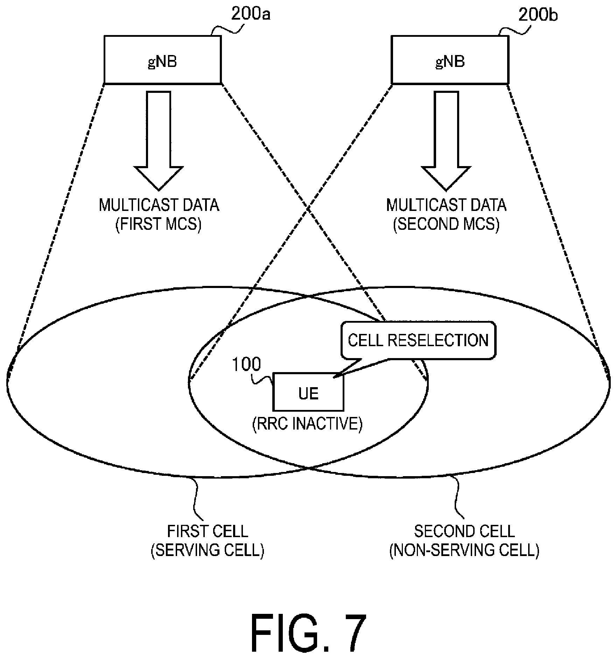

FIG. 7 is a diagram illustrating an overview of an operation in accordance with the first operation pattern of the embodiment.

In the first operation pattern, the UE 100 that performs the multicast reception in the RRC inactive state discards, at the time of cell reselection, the reception quality threshold value (threshold value configuration) received from the gNB 200 using the RRC release message. Specifically, the UE 100 discards, at the time of cell reselection from the first cell to the second cell, the reception quality threshold value (threshold value configuration) received in the first cell using the RRC release message.

In the illustrated example, the UE 100 is located in an overlapping region of a first cell of a gNB 200a and a second cell of a gNB 200b, and selects the first cell as a serving cell. However, the first cell and the second cell need not belong to different gNBs 200, and may belong to the same gNB 200. It is assumed that, after the UE 100 receives the reception quality threshold value (threshold value configuration) using the RRC release message in the first cell, the UE 100 performs reception of multicast session in which the UE 100 has participated (that is, multicast reception) in the first cell. Here, it is assumed that the gNB 200a transmits multicast data, which is the data of the multicast session in which the UE 100 has participated, using a first MCS.

On the other hand, it is assumed that the second cell also provides the multicast session in which the UE 100 has participated, and the gNB 200b transmits multicast data, which is the data of the multicast session in which the UE 100 has participated, using a second MCS. For example, the second MCS may be an MCS having lower error tolerance than the first MCS.

Thus, when the MCS for multicast transmission differs between the first cell and the second cell, the reception quality threshold value configured in the first cell may become inappropriate in the second cell. For example, when a poor reception quality threshold value is configured in the RRC release message in the first cell, if the UE 100 continues to apply such a reception quality threshold value in the second cell, it is difficult for the UE 100 to perform the multicast reception in the RRC inactive state in the second cell normally.

Therefore, the UE 100 discards, at the time of cell reselection from the first cell to the second cell, the reception quality threshold value (threshold value configuration) received using the RRC release message in the first cell. This makes it possible to solve such a problem. While discarding the reception quality threshold value (threshold value configuration), the UE 100 may acquire a new reception quality threshold value (threshold value configuration) provided using the multicast MCCH in the second cell and apply the acquired reception quality threshold value (threshold value configuration) in the second cell.

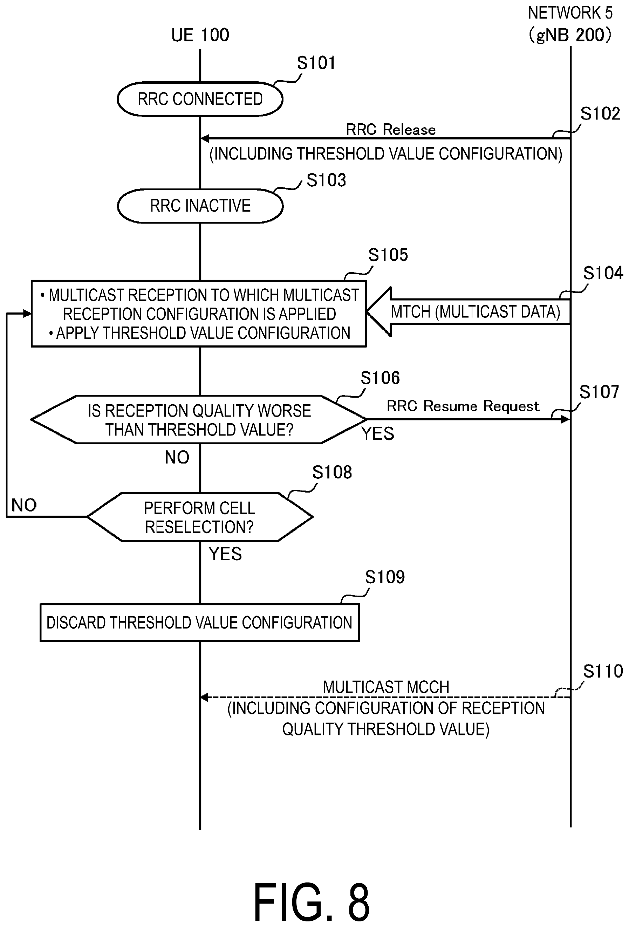

FIG. 8 is a diagram illustrating an example of an operation in accordance with the first operation pattern of the embodiment.

In step S101, the UE 100 is in the RRC connected state in a cell of the gNB 200.

In step S102, the gNB 200 determines that the UE 100 is caused to perform the multicast reception in the RRC inactive state, and transmits, to the UE 100, the RRC release message including the suspend configuration, that is, an RRC release message for causing the UE 100 to transition to the RRC inactive state. The UE 100 receives the RRC release message. The RRC release message includes the multicast reception configuration (PTM configuration) for the multicast reception in the RRC inactive state. In the first operation pattern, the multicast reception configuration includes the reception quality threshold value to be compared with the multicast reception quality.

In step S103, the UE 100 transitions to the RRC inactive state in response to reception of the RRC release message of step S102.

In step S104, the gNB 200 transmits, on the MTCH, the MBS data (multicast data) of the multicast session in which the UE 100 has participated.

In step S105, the UE 100 applies the multicast reception configuration received in step S102, and performs the multicast reception in the RRC inactive state. Specifically, the UE 100 receives the MBS data (multicast data) of the multicast session participated by the UE 100 on MTCH from the gNB 200. Also, the UE 100 measures reception quality (for example, RSRP and/or RSRQ) for the gNB 200 (the serving cell).

In step S107, the UE 100 compares the reception quality measurement result in step S105 with the reception quality threshold value configured in step S102. When the reception quality measurement result in step S105 is worse than the reception quality threshold value (step S106: YES), the UE 100 starts the RRC connection resume procedure and transmits the RRC resume request message to the gNB 200 in step S107. The gNB 200 receives the RRC resume request message. When the RRC connection resume procedure is completed, the UE 100 transitions from the RRC inactive state to the RRC connected state. In the RRC connected state, the gNB 200 can apply link adaptation and/or retransmission control specialized for the UE 100, thereby facilitating the multicast reception even for the UE 100 in a poor radio environment.

When the reception quality measurement result in step S105 is not worse than the reception quality threshold value (step S106: NO), the UE 100 determines whether to perform cell reselection in step S108. For example, the UE 100 determines that cell reselection from the first cell to the second cell is performed in response to a frequency priority of the second cell, which is a non-serving cell, being higher than that of the first cell, which is a current serving cell, and/or reception quality of the second cell being higher than that of the first cell. When the cell reselection is not performed (step S108: NO), the UE 100 returns the processing to step S105.

On the other hand, when the cell reselection is performed (step S108: YES), the UE 100 discards, in step S109, the threshold value configuration (reception quality threshold value) received in step S102. In step S110, the UE 100 may acquire, in the second cell, a new reception quality threshold value (threshold value configuration) provided using the multicast MCCH, and may apply the acquired reception quality threshold value (threshold value configuration) in the second cell.

In the present operation pattern, an example in which the UE 100 discards, at the time of cell reselection from the first cell to the second cell, the reception quality threshold value (threshold value configuration) received using the RRC release message from the gNB 200 (first cell) has been described. However, the UE 100 may suspend (temporarily stop) application of the reception quality threshold value (threshold value configuration) received using the RRC release message from the gNB 200, at the time of the cell reselection. When the UE 100 returns from the second cell to the first cell through the cell reselection, the UE 100 may resume application of the suspended reception quality threshold value (threshold value configuration).

Further, in the present operation pattern, the reception quality threshold value (threshold value configuration) received using the RRC release message has been described as an example, but the UE 100 may receive the reception quality threshold value using the multicast MCCH.

### (3.2.2) Second Operation Pattern

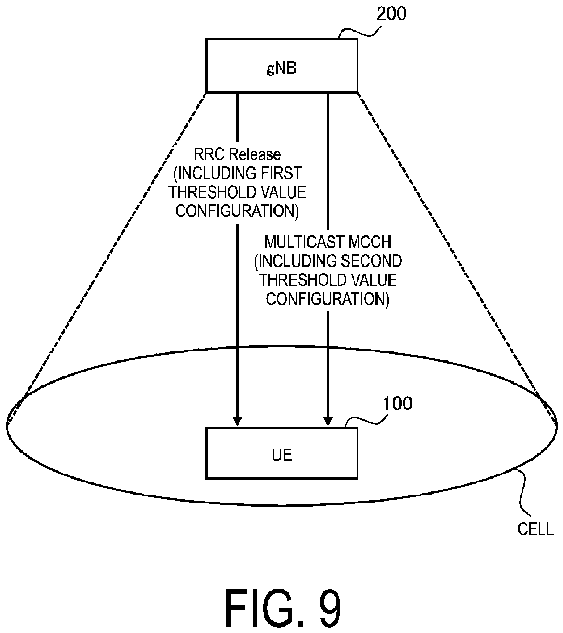

FIG. 9 is a diagram illustrating an overview of an operation in accordance with the second operation pattern of the embodiment.

In the second operation pattern, when the UE 100 that performs the multicast reception in the RRC inactive state receives the second threshold value configuration (reception quality threshold value) using the multicast MCCH after receiving the first threshold value configuration (reception quality threshold value) using the RRC release message, the UE 100 stops applying the first threshold value configuration (reception quality threshold value) and starts applying the second threshold value configuration (reception quality threshold value). Here, the UE 100 may overwrite the first threshold value configuration (reception quality threshold value) with the second threshold value configuration (reception quality threshold value).

Here, when the threshold value configuration (reception quality threshold value) is performed on a multicast session basis, the UE 100 may perform the above operation only when the UE 100 receives the second threshold value configuration (reception quality threshold value) for the multicast session in which the UE 100 has participated after receiving the first threshold value configuration (reception quality threshold value) for the multicast session in which the UE 100 has participated.

In the second operation pattern, the gNB 200 may configure, for the UE 100, on a UE (100) basis or on a multicast session basis, the designation information for designating whether to prioritize the reception quality threshold value configured in the RRC release message or to prioritize the reception quality threshold value configured in the multicast MCCH.

In the illustrated example, the UE 100 is located in the cell of the gNB 200. The gNB 200 transmits, to the UE 100, the first threshold value configuration (reception quality threshold value) using the RRC release message. Further, when the gNB 200 changes the multicast reception configuration (for example, an MCS applied to the MTCH), the gNB 200 may transmit, using the multicast MCCH, a new multicast reception configuration including a second threshold value configuration (reception quality threshold value). Under such an assumption, it is necessary to clarify the operation of the UE 100 that has received both the first threshold value configuration and the second threshold value configuration.

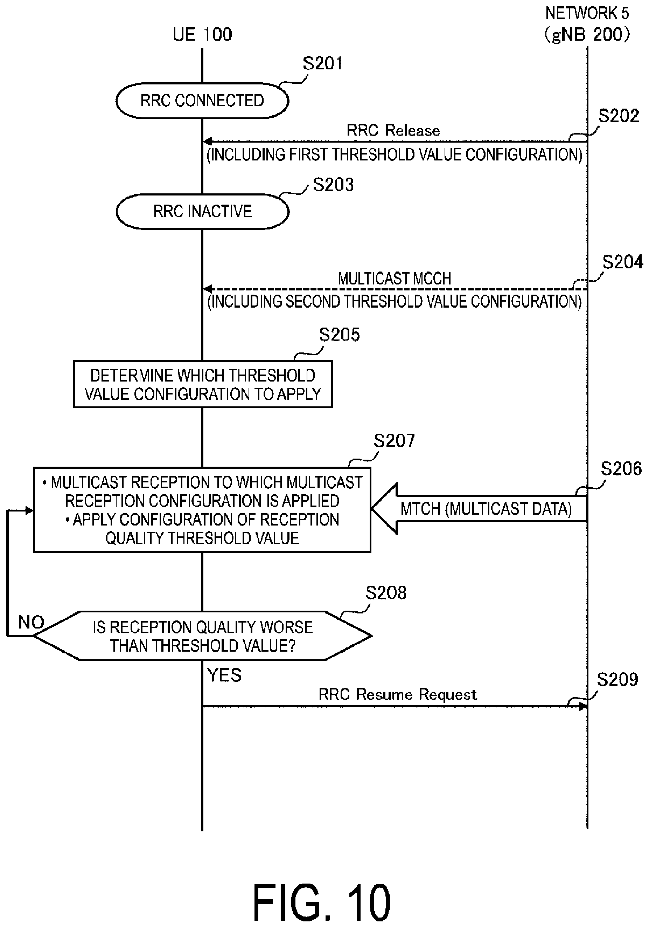

FIG. 10 is a diagram illustrating an example of an operation in accordance with the second operation pattern of the embodiment. Here, differences from the above-described first operation pattern will mainly be described.

In step S201, the UE 100 is in the RRC connected state in the cell of the gNB 200.

In step S202, the gNB 200 determines that the UE 100 is caused to perform the multicast reception in the RRC inactive state, and transmits, to the UE 100, the RRC release message including the suspend configuration, that is, an RRC release message for causing the UE 100 to transition to the RRC inactive state. The UE 100 receives the RRC release message. The RRC release message includes the multicast reception configuration (PTM configuration) for the multicast reception in the RRC inactive state. In the second operation pattern, the multicast reception configuration includes a first threshold value configuration for configuring the reception quality threshold value to be compared with the multicast reception quality.

In the second operation pattern, the RRC release message in step S202 may include designation information indicating which threshold value configuration is to be prioritized between the first threshold value configuration (reception quality threshold value) provided using the RRC release message and the second threshold value configuration (reception quality threshold value) provided using the multicast MCCH in step S204. The designation information may be configured on a multicast session basis. The designation information may be included in the multicast reception configuration (PTM configuration). The designation information may be information for instructing that the latest threshold value configuration is always prioritized. Specifically, the designation information may be information for designating that, between the first threshold value configuration (reception quality threshold value) provided using the RRC release message and the second threshold value configuration (reception quality threshold value) provided using the multicast MCCH, the latest threshold value configuration at the UE 100 is applied.

In step S203, the UE 100 transitions to the RRC inactive state in response to the reception of the RRC release message in step S202.

In step S204, the gNB 200 transmits the multicast MCCH (the multicast MCCH message) including the multicast reception configuration (PTM configuration) for the multicast reception in the RRC inactive state. The UE 100 receives the multicast MCCH. The multicast reception configuration includes a second threshold value configuration for configuring the reception quality threshold value to be compared with the multicast reception quality.

In the second operation pattern, the multicast MCCH (multicast MCCH message) in step S204 may include designation information indicating which threshold value configuration is to be prioritized between the first threshold value configuration (reception quality threshold value) provided using the RRC release message and the second threshold value configuration (reception quality threshold value) provided using the multicast MCCH. The designation information may be configured on a multicast session basis. The designation information may be included in the multicast reception configuration (PTM configuration). The designation information may be information for instructing that the latest threshold value configuration is always prioritized. Specifically, the designation information may be information for designating that, between the first threshold value configuration (reception quality threshold value) provided using the RRC release message and the second threshold value configuration (reception quality threshold value) provided using the multicast MCCH, the latest threshold value configuration at the UE 100 is applied.

In step S205, the UE 100 determines which of the first threshold value configuration and the second threshold value configuration is to be applied.

The UE 100 may always prioritize the latest threshold value configuration. When the UE 100 receives the second threshold value configuration after reception of the first threshold value configuration, the UE 100 applies the second threshold value configuration. Although this operation example assumes that the UE 100 receives the second threshold value configuration after reception of the first threshold value configuration, the UE 100 may receive the second threshold value configuration before the first threshold value configuration. When the UE 100 receives the first threshold value configuration after reception of the second threshold value configuration, the UE 100 may apply the first threshold value configuration.

Alternatively, the UE 100 may apply the threshold value configuration for configuring the reception quality threshold value corresponding to better reception quality between the first threshold value configuration and the second threshold value configuration. For example, when the UE 100 receives the second threshold value configuration after reception of the first threshold value configuration and reception quality indicated by the reception quality threshold value configured by the second threshold value configuration is better than reception quality indicated by the reception quality threshold value configured by the first threshold value configuration, the UE 100 may apply the second threshold value configuration. Otherwise, the UE 100 may continue applying the first threshold value configuration being currently applied. Assuming an example in which the reception quality threshold value is an RSRP threshold value, when the UE 100 receives the second threshold value configuration after reception of the first threshold value configuration, and the RSRP threshold value configured by the second threshold value configuration is higher than the RSRP threshold value configured by the first threshold value configuration, the UE 100 may apply the second threshold value configuration. Otherwise, the UE 100 may continue applying the first threshold value configuration being currently applied. Such a scenario may be a scenario in which the gNB 200 changes an MCS applied to multicast transmission (MTCH transmission) of a multicast session to an MCS having lower error tolerance. For example, the gNB 200 configures a poor reception quality threshold value as the first threshold value configuration when the gNB 200 performs MTCH transmission using an MCS having high error tolerance, and then, configures a good reception quality threshold value as the second threshold value configuration when the gNB 200 performs MTCH transmission using an MCS having low error tolerance.

Alternatively, when the UE 100 receives the designation information (that is, an explicit instruction of the gNB 200) in the RRC release message and/or the multicast MCCH, the UE 100 may select a threshold value configuration to be applied in accordance with the designation information. The designation information may be any of: (1) prioritizing the first threshold value configuration, (2) prioritizing the second threshold value configuration, and (3) always prioritizing the latest (most recently received) threshold value.

In step S206, the gNB 200 transmits, on the MTCH, the MBS data (multicast data) of the multicast session in which the UE 100 has participated.

In step S207, the UE 100 applies multicast reception configuration and performs the multicast reception in the RRC inactive state. Specifically, the UE 100 receives the MBS data (multicast data) of the multicast session participated by the UE 100 on MTCH from the gNB 200. Also, the UE 100 measures reception quality (for example, RSRP and/or RSRQ) for the gNB 200 (the serving cell).

In step S208, the UE 100 compares the reception quality measurement result in step S207 with the reception quality threshold value determined in step S205. When the reception quality measurement result is worse than the reception quality threshold value (step S208: YES), the UE 100 starts the RRC connection resume procedure and transmits the RRC resume request message to the gNB 200 in step S209. The gNB 200 receives the RRC resume request message. When the RRC connection resume procedure is completed, the UE 100 transitions from the RRC inactive state to the RRC connected state.

### (3.2.3) Third Operation Pattern

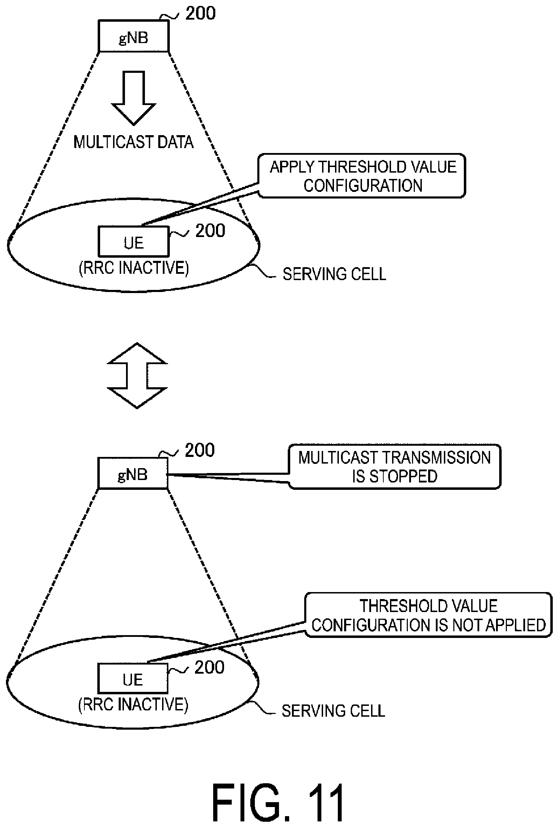

FIG. 11 is a diagram illustrating an overview of an operation in accordance with the third operation pattern of the embodiment.

In the third operation pattern, when the multicast session (multicast session in which the UE 100 has participated) is temporarily stopped (suspended), for example, when the UE 100 receives information for instructing stopping MTCH reception from the gNB 200, the UE 100 that performs the multicast reception in the RRC inactive state stops applying the threshold value configuration (the reception quality threshold value). That is, when the UE 100 is not receiving the multicast session (MTCH), the UE 100 stops applying the threshold value configuration (the reception quality threshold value). In this case, the UE 100 may discard the threshold value configuration (the reception quality threshold value).

When the multicast session is resumed, for example, when the UE 100 receives information indicating start of MTCH reception from the gNB 200, the UE 100 applies (reapplies) the threshold value configuration (the reception quality threshold value). That is, when the UE 100 is receiving the multicast session (MTCH), the UE 100 applies the threshold value configuration (the reception quality threshold value).

The multicast session has two session states including an active state and an inactive state. The active state may include a state in which there is temporarily no data. When the multicast session is in the inactive state or in a state in which there is temporarily no data, the UE 100 is not performing the MTCH reception, and thus, there is no need to start RRC resume based on the reception quality threshold value. Therefore, in the third operation pattern, the UE 100 applies the threshold value configuration (the reception quality threshold value) only when the multicast session (the multicast session in which the UE 100 has participated) is activated and/or when the UE 100 is receiving the data of the multicast session.

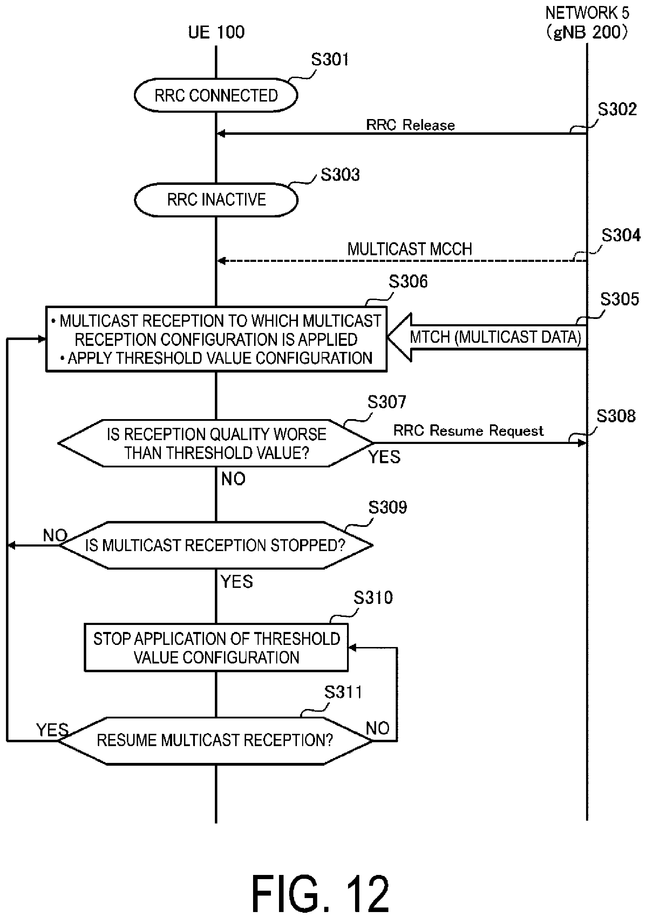

FIG. 12 is a diagram illustrating an example of an operation in accordance with the third operation pattern of the embodiment. Here, differences from the first and second operation patterns described above will mainly be described.

In step S301, the UE 100 is in the RRC connected state in the cell of the gNB 200.

In step S302, the gNB 200 determines that the UE 100 is caused to perform the multicast reception in the RRC inactive state, and transmits, to the UE 100, the RRC release message including the suspend configuration, that is, an RRC release message for causing the UE 100 to transition to the RRC inactive state. The UE 100 receives the RRC release message. The RRC release message may include the multicast reception configuration (the PTM configuration) for multicast reception in the RRC inactive state. The multicast reception configuration may include threshold value configuration for configuring the reception quality threshold value to be compared with the multicast reception quality.

In step S303, the UE 100 transitions to the RRC inactive state in response to the reception of the RRC release message in step S302.

In step S304, the gNB 200 may transmit the multicast MCCH (the multicast MCCH message) including the multicast reception configuration (PTM configuration) for the multicast reception in the RRC inactive state. The UE 100 may receive the multicast MCCH. The multicast reception configuration may include threshold value configuration for configuring the reception quality threshold value to be compared with the multicast reception quality.

In step S305, the gNB 200 transmits, on the MTCH, the MBS data (multicast data) of the multicast session in which the UE 100 has participated.

In step S306, the UE 100 applies the multicast reception configuration received in step S302 or step S304, and performs the multicast reception in the RRC inactive state. Specifically, the UE 100 receives the MBS data (multicast data) of the multicast session participated by the UE 100 on MTCH from the gNB 200. Also, the UE 100 measures reception quality (for example, RSRP and/or RSRQ) for the gNB 200 (the serving cell).

In step S307, the UE 100 compares the reception quality measurement result in step S306 with the reception quality threshold value received in step S302 or step S304. When the reception quality measurement result is worse than the reception quality threshold value (step S307: YES), the UE 100 starts the RRC connection resume procedure and transmits the RRC resume request message to the gNB 200 in step S308. The gNB 200 receives the RRC resume request message. When the RRC connection resume procedure is completed, the UE 100 transitions from the RRC inactive state to the RRC connected state.

On the other hand, when the reception quality measurement result is not worse than the reception quality threshold value (step S307: NO), the UE 100 determines whether to stop the multicast reception in step S309. For example, the UE 100 determines that the multicast reception stops when at least one of 1) a condition that the UE 100 is not receiving the multicast session (MTCH), (2) a condition that the multicast session has become inactive, or (3) a condition that MTCH transmission stop information (or MTCH reception stop instruction) or session deactivation information has been received from the gNB 200 is satisfied. The UE 100 may determine that the multicast reception stops when a condition that the multicast reception configuration of the multicast session in which the UE 100 has participated no longer exists in the multicast MCCH is satisfied.

Here, "not receiving the multicast session (MTCH)" may mean that the UE 100 has not received the multicast session (MTCH) for a certain period. The certain period may be configured for the UE 100 by the gNB 200 using the RRC release message or the multicast MCCH. The certain period may be a timer value (that is, milliseconds) or may be a number of radio frames (or a number of slots or a number of subframes).

"Not receiving the multicast session (MTCH)" may also mean that the UE 100 has failed to receive a PDSCH or a PDCCH (scrambled by a G-RNTI) for transmitting the data of the multicast session.

"The multicast session has become inactive" may mean that the UE 100 does not hold or cannot receive control information for receiving the multicast session (MTCH). For example, this may be a case in which scheduling information for the multicast session (MTCH) of interest is removed from the multicast MCCH, or a case in which the scheduling information is not notified of.

When the multicast reception is not stopped (step S309: NO), the UE 100 returns the processing to step S306.

On the other hand, when the multicast reception is to be stopped (step S309: YES), the UE 100 in step S310 stops applying the reception quality threshold value (threshold value configuration) received in step S302 or step S304. In this case, the UE 100 may discard the reception quality threshold value (threshold value configuration).

In step S311, the UE 100 determines whether to resume the multicast reception. For example, when at least one of 1) a condition that the multicast session (MTCH) has been received, 2) a condition that the multicast session has become active, or 3) a condition that MTCH transmission start information (or MTCH reception instruction) or session activation information has been received from the gNB 200 is satisfied, the UE 100 determines to resume the multicast reception. The UE 100 may determine that the multicast reception is resumed when a condition that the multicast reception configuration of the multicast session in which the UE 100 has participated exists in the multicast MCCH is satisfied. When the UE 100 does not hold the reception quality threshold value (threshold value configuration), the UE 100 may acquire the reception quality threshold value (threshold value configuration) from the multicast MCCH, for example.

When the multicast reception is not to be resumed (step S311: NO), the UE 100 returns the processing to step S310. On the other hand, when multicast reception is to be resumed (step S311: YES), the UE 100 returns the processing to step S306.

### (4) Other embodiments

Although, in the above-described embodiment, an example in which threshold value configuration (reception quality threshold value) is performed on a multicast session basis has been described, the threshold value configuration (a reception quality threshold value) may be performed commonly for a plurality of multicast sessions.

Although the multicast reception in the RRC inactive state has been mainly described in the above-described embodiments, the operations according to the above-described embodiments may also be applied to multicast reception in the RRC idle state. In the case of the RRC idle state, the above-described RRC resume is replaced with RRC establishment, and the above-described resume cause is replaced with establishment cause.

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed. Also, in each flow, an order between steps may be appropriately changed.

Although the example in which the base station is an NR base station (gNB) has been described in the embodiments and examples described above, the base station may be an LTE base station (eNB) or a 6G base station. The base station may be a relay node such as an Integrated Access and Backhaul (IAB) node. The base station may be a DU of the IAB node. The UE 100 may be a Mobile Termination (MT) of the IAB node.

That is, the UE 100 may be a terminal function unit (a type of communication module) for a base station to control a repeater that performs signal relay. Such terminal function unit is referred to as an MT. Examples of the MT include, a Network Controlled Repeater (NCR)-MT, a Reconfigurable Intelligent Surface (RIS)-MT, in addition to the IAB-MT.

The term "network node" mainly means a base station, but may also mean a core network apparatus or a part (CU, DU, or RU) of the base station. The network node may include a combination of at least a part of the apparatus of the core network and at least a part of the base station.

A program causing a computer to execute each of the processing performed by the UE 100 or the gNB 200 may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 and the gNB 200 may be implemented as a semiconductor integrated circuit (chipset, System on a chip (SoC)).

The functions achieved by the UE 100 or the gNB 200 (the network node) may be implemented in a circuitry or a processing circuitry programmed to perform the described functions, including a general-purpose processor, a special-purpose processor, an integrated circuit, application specific integrated circuits (ASICs), a central processing unit (CPU), a conventional circuit, and/or combinations thereof. The processor may include transistors and other circuits and may be considered a circuitry or a processing circuitry. The processor may be a programmed processor that executes a program stored in the memory. As used herein, a circuitry, a unit, means are hardware programmed to achieve, or hardware performing, the described functions. The hardware may be any hardware disclosed herein or any hardware programmed to achieve or known to perform the described functions. When the hardware is a processor that is considered to be a type of circuitry, the circuitry, means, or a unit is a combination of hardware and software used to configure the hardware and/or the processor.

The phrases "based on" and "depending on/in response to" used in the present disclosure do not mean "based only on" and "only depending on/in response to" unless specifically stated otherwise. The phrase "based on" means both "based only on" and "based at least in part on". The phrase "depending on" means both "only depending on" and "at least partially depending on". The terms "include," "comprise" and variations thereof do not mean "include only items stated" but instead mean "may include only items stated" or "may include not only the items stated but also other items." The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

The embodiments have been described above in detail with reference to the drawings, but specific configurations are not limited to those described above, and various design variation can be made without departing from the gist of the present disclosure.

This application claims priority to U.S. Provisional Application No. 63/540282 (filed Sep. 25, 2023), and the entire contents thereof are incorporated into the present specification.

### (5) First Supplement

Features relating to the above embodiments are supplemented below.

### (Supplement 1)

A communication method executed by a user equipment in a mobile communication system for providing a multicast broadcast service (MBS), the communication method including the steps of:
receiving, from a network node, a threshold value configuration for configuring a threshold value to be compared with reception quality upon reception of a multicast session in a radio resource control (RRC) inactive state, the threshold value being used to determine whether to start an RRC connection resume;
applying the threshold value configuration such that the reception quality is compared with the threshold value in the RRC inactive state; and
stopping applying the threshold value configuration in response to satisfying a predetermined condition related to the multicast reception in the RRC inactive state.

### Supplement 2

The communication method according to supplement 1, wherein
the receiving of the threshold value configuration includes receiving an RRC release message including the threshold value configuration,
the predetermined condition is execution of cell reselection, and
the stopping includes discarding the threshold value configuration received using the RRC release message in response to execution of the cell reselection.

### Supplement 3

The communication method according to supplement 1, wherein
the receiving of the threshold value configuration includes the steps of:
receiving, using the RRC release message, a first threshold value configuration for configuring a threshold value to be compared with the reception quality; and
receiving, using a multicast multicast control channel (MCCH), a second threshold value configuration for configuring a threshold value to be compared with the reception quality, the applying includes applying one of the first threshold value configuration or the second threshold value configuration when both the first threshold value configuration and the second threshold value configuration are received, and
the stopping includes stopping applying the other of the first threshold value configuration or the second threshold value configuration when both the first threshold value configuration and the second threshold value configuration are received.

### Supplement 4

The communication method according to supplement 3, wherein
the applying includes applying the first threshold value configuration in response to the reception of the first threshold value configuration, and
the stopping includes starting applying the second threshold value configuration and stopping applying the first threshold value configuration in response to reception of the second threshold value configuration after receiving the first threshold value configuration.

### Supplement 4

The communication method according to supplement 4, wherein
the stopping includes starting applying the second threshold value configuration and stopping applying the first threshold value configuration when reception quality corresponding to the threshold value configured by the second threshold value configuration is better than reception quality corresponding to the threshold value configured by the first threshold value configuration.

### Supplement 5

The communication method according to supplements 3 or 4, further including:
receiving, from the network node, designation information for designating a threshold value configuration, among the first threshold value configuration and the second threshold value configuration, to be applied by the user equipment,
wherein the applying includes applying the threshold value configuration, among the first threshold value configuration and the second threshold value configuration, designated in accordance with the designation information when both the first threshold value configuration and the second threshold value configuration are received.

### Supplement 6

The communication method according to supplement 1, wherein
the applying includes applying the threshold value configuration when performing the multicast reception;
the stopping includes stopping applying the threshold value configuration when the multicast reception is not performed.

### Supplement 7

The communication method according to supplement 6,
wherein the stopping includes discarding the threshold value configuration when the multicast session is not activated and/or when data of the multicast session is not being received.

### Supplement 8

A user equipment used in a mobile communication system for providing a multicast broadcast service (MBS), the user equipment including:
a receiver configured to receive, from a network node, a threshold value configuration for configuring a threshold value to be compared with reception quality upon reception of a multicast session in a radio resource control (RRC) inactive state, the threshold value being used to determine whether to start an RRC connection resume; and
a controller configured to apply the threshold value configuration such that the reception quality is compared with the threshold value when performing the multicast reception in the RRC inactive state,
wherein the controller stops applying the threshold value configuration in response to satisfying a predetermined condition related to the multicast reception in the RRC inactive state.

### (6) Second Supplement

### 1. Introduction

A work item regarding enhancement of MBS (eMBS) is intended to support multicast reception in the UE in the inactive state as follows:
- To define support for multicast reception by the UE in the RRC inactive state [RAN2, RAN3] • The PTM configuration for the UE that receives multicast in the RRC inactive state [RAN2].
   - investigating impacts of mobility and state transition of the UE that receives multicast in the RRC inactive state. (Seamless/lossless mobility is not mandatory) [RAN2, RAN3].

In this supplement, details of the RRC resume due to bad quality and causes of resume are discussed.

### 2. Discussion

### 2.1. RRC Resume Due to Bad Reception Quality

RAN2#123 agreed to introduce RSRP/RSRQ-based RRC resume as follows.

In the UE that receives multicast in the RRC inactive state, when RSRP or RSRQ measured based on an existing measurement requirement (as configured by NW) of the serving cell becomes lower than the threshold value configured by the network, the UE resumes the RRC connection. Further study is needed on whether it is necessary to address a ping-pong issue.

The threshold value can be PTM-configured per MBS session via the RRC release or the multicast MCCH message.

Based on agreements, remaining issues are discussed in the following section.

### 2.1.1. Ping-pong Issue

The agreements are obtained by capturing discussion items regarding "whether it is necessary to address the ping-pong issue and/or how to address the ping-pong issue." As scenarios for resuming a ping-pong operation, the following can be considered:
1. The UE in the inactive state with deteriorating radio quality starts RRC resume when RSRP/RSRQ becomes worse than a threshold value.
2. In response to the RRC resume request, the gNB under NW congestion transmits the RRC release with suspend config. including the RSRP/RSRQ threshold value.
3. The UE with still-deteriorated radio quality transitions to the inactive state again, and since RSRP/RSRQ immediately becomes lower than the threshold value, RRC resume is started again.

In order to avoid ping-pong in the above scenario, it can be considered that the gNB maintains the UE in the connected state or sets an appropriate RSRP/RSRQ threshold value for the UE.

In order to support such a determination, the gNB is likely to need to ascertain a radio condition and/or a reason for RRC resume (in this case, due to deterioration of radio quality) as soon as the UE requests RRC resume.

Finding 1: The gNB is likely to need to ascertain the radio condition of the UE and the reason for RRC resume when the UE requests RRC resume in order to guarantee QoS requirements.

According to discussion in RAN2 at an early stage of Release 18, it should be noted that two main motivations for supporting multicast reception in the inactive state are NW congestion mitigation and UE power consumption. Therefore, it is not reasonable that, each time the UE requests RRC resume, the gNB always keeps the UE in the connected state and configures measurement reporting.

Finding 2: Since motivations for supporting multicast reception in the inactive state are NW congestion mitigation and UE power saving, it is not reasonable to rely on measurement reporting for guaranteeing of the QoS requirements.

In consideration of the above findings, it is useful that, when the UE starts the RRC resume due to deterioration of reception quality in the RRC resume procedure, that is, in the RRC resume request or an RRC resume complete, the UE reports measurement results. Another option is that the UE notifies deterioration of radio wave state in the resume causes. With such information, the gNB can make an appropriate determination as to whether to maintain the UE in the connected state for QoS guarantee.

Proposal 1: RAN2 should agree that measurement results are reported in the RRC resume procedure, or that a new resume cause "Multicast quality" is introduced.

### 2.1.2. Validity of RSRP/RSRQ Threshold Configured by the RRC release

RAN2 agreed that "a threshold value can be configured in the PTM configuration per MBS session based on an the RRC release or the multicast MCCH message." In the case of dedicated configuration provided by RRC release, many configurations are valid until a corresponding timer expires. For example, dedicated frequency priority is valid until T320 expires. This occurs regardless of cell reselection, and after the UE reselects a target cell, dedicated configuration provided from a source cell is valid.

Finding 3: According to current specifications, many dedicated configurations are valid until the timer expires regardless of the cell reselection.

As for the RSRP/RSRQ threshold value, when it is valid after the cell reselection, an issue is likely to occur assuming the following conditions:
- In the source cell, since the PTM is transmitted with a low MCS, the UE has set a low RSRP threshold value in order to guarantee certain reception quality.
- In a target cell after the cell reselection, the PTM is transmitted with a higher MCS, but the UE keeps applying the old RSRP threshold value.
- As a result, the UE will cause an MTCH reception error even though RSRP is still better than an old threshold value.

In order to avoid this issue, considering that PTM transmission of NR MBS is cell-specific, the RSRP/RSRQ threshold value should be cell-specific. That is, when the UE reselects a different cell, an old RSRP/RSRQ threshold value should be discarded.

Proposal 2: RAN2 should agree that the RSRP/RSRQ threshold value is discarded upon the cell reselection.

Another issue that may be considered in processing the RSRP/RSRQ threshold value is that, when threshold values are provided from both the RRC release and the multicast MCCH, the UE needs to determine which threshold value should be applied. In a current specification, generally, dedicated configuration provided by the RRC release is prioritized over a configuration provided by an SIB. However, in the case of multicast reception in the inactive state, RAN2 agreed that "In a case in which it is necessary to change the PTM configuration, MCCH is used when it is necessary to indicate the PTM configuration," that is, the PTM configuration provided by the RRC release is likely to be changed by the PTM configuration provided by the multicast MCCH. This means that, since the RSRP/RSRQ threshold value is overwritten by the multicast MCCH, threshold value cannot be configured as a UE-specific configuration, that is, a TMGI-specific configuration.

Proposal 3: RAN2 needs to confirm that the PTM configuration including the RSRP/RSRQ threshold value provided by the RRC release is always overwritten by configuration provided by the multicast MCCH, that is, there is no UE-specific configuration for multicast reception in the inactive state.

### 2.1.3. Other Confirmation Matters

RAN2#123 agreed that "for the UE that receives multicast in the RRC inactive state, when measured RSRP or RSRQ[...] of the serving cell becomes lower than a threshold value [...], the UE resumes the RRC connection." The threshold value of RSRP/RSRQ is introduced for QoS guarantee of multicast reception in the inactive state.

On the other hand, when the multicast session is deactivated by the network, the UE in an inactive state may not receive MTCH (or may temporarily not receive data) when the session is deactivated. In this case, since the UE is regarded as the same as a legacy UE in the inactive state, RRC resume due to bad quality (the RSRP/RSRQ threshold value) is not necessary. Although the above agreements have already been suggested, it is necessary to confirm that, even when RSRP/RSRQ deteriorates below a threshold value, a UE in an inactive state does not start the RRC resume when a multicast session is inactive (deactivated) (or when there is temporarily no data).

Proposal 4: RAN2 needs to confirm that the UE in the inactive state does not start the RRC resume even when RSRP/RSRQ becomes worse than the threshold value in a case in which the multicast session is deactivated (or there is temporarily no data).

In RAN2#123, RAN2 has discussed whether the threshold value can be based on BLER, but finally RAN2 has determined that RSRP/RSRQ is adopted.

On the other hand, in Release 17, it was a common understanding of RAN2 that single frequency network (SFN) is deployable, for example, only in the DU due to NW implementation. In SFN between cells, by combining receptions from MTCH of different cells, reception quality is stable even at a cell edge. However, RSRP/RSRQ is cell-specific, and deteriorates at a cell edge when leaving the SFN. Therefore, the RSRP/RSRQ threshold value does not work well in SFN deployment, but the BLER threshold value can avoid such an issue.

Proposal 5: RAN2 needs to confirm that SFN (single frequency network) allowed in Release 17 by the NW implementation does not operate with the RSRP/RSRQ threshold value in Release 18.

### 2.2. Resume Cause

RAN2#123 agreed that, in Release 18, for RRC resume due to some reasons as well as deterioration of reception quality discussed in the previous section, existing resume causes are reused. However, analysis is still needed regarding which existing resume cause is applied and whether a new resume cause is truly unnecessary.

Unless an issue is specified in using one of existing resume causes, a new resume cause is not introduced for a UE receiving MC in an inactive state when resuming is performed due to bad quality or lack of the SIBx/the PTM configuration.

Currently, 11 resume causes are defined with five spare fields below. ResumeCause ::= ENUMERATED {emergency, highPriorityAccess, mt-Access, mo-Signalling, mo-Data, mo-VoiceCall, mo-VideoCall, mo-SMS, rna-Update, mps-PriorityAccess, mcs-PriorityAccess, spare1, spare2, spare3, spare4, spare5}

Similarly to Finding 2 above, one of motivations of the multicast reception in the inactive state is network congestion mitigation. Therefore, the analysis needs to consider a case in which the network becomes congested.

Finding 4: Mapping between RRC resume for multicast reception and existing resume causes needs to consider a congestion condition of the network.

Typical determinations of the gNB when receiving the RRC resume request under network congestion are classified as follows:
- always accept an emergency;
- prioritize highPriorityAccess, mps-PriorityAccess, and mcs-PriorityAccess;
- accept mt-Access and mo-Signalling (as much as possible);
- may reject mo-Data, mo-VoiceCall, mo-VideoCall, and mo-SMS;
- respond a new RNA with RRC release for rna-Update.

Finding 5: By resume, the gNB can determine whether to accept, reject, or release with a new RNA in response to the RRC resume request particularly in the case of NW congestion.

RAN2 agreed that the UE starts RRC resume in two cases: "due to bad quality" or "due to lack of the SIBx/the PTM configuration." From a viewpoint of impact on a network load, features of these reasons differ as follows:
- As discussed in Section 2.1.1, in the case of the RRC resume due to bad quality, when the UE is released while still being in the inactive state again, the QoS requirements are no longer guaranteed, and thus the UE needs to be maintained in the connected state. Considering that the UE needs to be maintained in the connected state, the UE does not consume additional downlink resources (because the UE only receives PTM already transmitted to other UEs), but consumes uplink resources (such as HARQ ACK). When a network is congested, the UE consumes slightly more resources compared to the multicast reception in the inactive state, but still this may be prioritized over a resume request of a unicast service. In other words, the gNB may prioritize the RRC resume request for multicast reception over the RRC resume request for unicast reception, but the gNB may still reject the RRC resume request due to severe congestion.
- In the case of the RRC resume due to lack of the SIBx/the PTM configuration, when a radio condition is good, the UE can be released in the PTM configuration, that is, in the RRC resume, to receive the multicast session. Therefore, this is "light" in terms of network congestion, that is, the UE consumes almost no downlink resource/uplink resource. In other words, the NW can immediately accept the RRC resume request on the premise of the RRC release accompanied by the PTM configuration of RRC resume.

Finding 6: Since the gNB affects the NW congestion to some extent in order to maintain the UE in the connected state when the NW is congested, the gNB may reject RRC resume due to bad quality.

Finding 7: Due to lack of the SIBx/the PTM configuration, the gNB can accept the RRC resume and immediately release the UE with the PTM configuration. This is because the NW congestion is not affected.

In consideration of the above discussion, the RRC resume due to bad quality is likely to be mapped to any of mo-Data, mo-VoiceCall, mo-VideoCall, or mo-SMS. However, since multicast reception in connected does not require additional PDSCH resources (that is, PTM is already provided to other UEs), current gNB implementation with respect to such existing resume cause is likely to be affected when a different type of communication (that is, multicast reception only) is mapped to an existing resume cause.

For RRC resume due to lack of the SIBx/the PTM configuration, since there is a new intent of RRC resume accompanied by the PTM configuration, there is no resume cause to be mapped. Although a similar gNB determination is assumed in rna-Update, the gNB provides RNA instead of the PTM configuration for RRC resume. That is, the gNB cannot transmit the RRC release with the PTM configuration in response to the RRC resume request, and the gNB may erroneously reject the UE request even though the UE only requests the PTM configuration update without impact on NW congestion.

Finding 8: There is no existing resume cause that conforms to a gNB determination expected in the case of the RRC resume request due to bad quality or due to lack of the SIBx/the PTM configuration.

RAN2 has actually identified a possibility of new resume causes in the following discussion.

### Resume causes:

1. Multicast quality
2. Multicast configuration

The two resume causes can easily solve all issues discussed above without potentially impacting current gNB implementation. As also discussed above, the two resume causes are effective for the gNB to appropriately derive different results. Therefore, two new resume causes should be introduced appropriately.

Since it is highly expected that 3GPP will start consideration of 6G from Release 20, it is expected that 5G NR evolves only for two releases in the future (that is, up to Release 20 at most). Considering a history of additional resume in past releases, three resume in Release 18 are sufficient.

Proposal 6: RAN2 should agree on a new resume cause "Multicast quality" configured when RRC resume is started due to bad quality. The determination of the expected gNB is prioritized over MO data, or the like.

Proposal 7: RAN2 should agree on a new resume cause "multicast configuration" configured when RRC resume is started due to lack of the SIBx/the PTM configuration. The determination of the expected gNB is to respond with an RRC release accompanied by the PTM configuration.

### REFERENCE SIGNS

1: Mobile communication system
5: Network
10: RAN
20: CN
100: User equipment (UE)
110: Receiver
120: Transmitter
130: Controller
200: gNB (Base station)
210: Transmitter
220: Receiver
230: Controller
240: Backhaul communicator

## Claims

1. A communication method executed by a user equipment in a mobile communication system for providing a multicast broadcast service (MBS), the communication method comprising the steps of:
receiving, from a network node, a threshold value configuration for configuring a threshold value to be compared with a reception quality upon reception of a multicast session in a radio resource control (RRC) inactive state, the threshold value being used to determine whether to start an RRC connection resume; and
applying the threshold value configuration such that the reception quality is compared with the threshold value when performing the multicast reception in the RRC inactive state.

2. The communication method according to claim 1, further comprising:
stopping applying the threshold value configuration in response to satisfying a predetermined condition related to the multicast reception in the RRC inactive state.

3. The communication method according to claim 2, wherein
the receiving of the threshold value configuration comprises receiving an RRC release message comprising the threshold value configuration,
the predetermined condition is execution of cell reselection, and
the stopping comprises discarding the threshold value configuration received using the RRC release message in response to execution of the cell reselection.

4. The communication method according to claim 2, wherein
the receiving of the threshold value configuration comprises the steps of:
receiving, using the RRC release message, a first threshold value configuration for configuring a threshold value to be compared with the reception quality; and
receiving, using a multicast multicast control channel (MCCH), a second threshold value configuration for configuring a threshold value to be compared with the reception quality,
the applying comprises applying one of the first threshold value configuration or the second threshold value configuration when both the first threshold value configuration and the second threshold value configuration are received, and
the stopping comprises stopping applying the other of the first threshold value configuration or the second threshold value configuration when both the first threshold value configuration and the second threshold value configuration are received.

5. The communication method according to claim 4, wherein
the applying comprises applying the first threshold value configuration in response to the reception of the first threshold value configuration, and
the stopping comprises starting applying the second threshold value configuration and stopping applying the first threshold value configuration in response to reception of the second threshold value configuration after receiving the first threshold value configuration.

6. The communication method according to claim 5, wherein
the stopping comprises starting applying the second threshold value configuration and stopping applying the first threshold value configuration when reception quality corresponding to the threshold value configured by the second threshold value configuration is better than reception quality corresponding to the threshold value configured by the first threshold value configuration.

7. The communication method according to claim 4, further comprising:
receiving, from the network node, designation information for designating a threshold value configuration, among the first threshold value configuration and the second threshold value configuration, to be applied by the user equipment,
wherein the applying comprises applying the threshold value configuration, among the first threshold value configuration and the second threshold value configuration, designated in accordance with the designation information when both the first threshold value configuration and the second threshold value configuration are received.

8. The communication method according to claim 1, wherein
the stopping comprises stopping applying the threshold value configuration when the multicast reception is not performed.

9. The communication method according to claim 8, wherein
the stopping comprises discarding the threshold value configuration when the multicast session is not activated and/or when data of the multicast session is not being received.

10. A user equipment used in a mobile communication system for providing a multicast broadcast service (MBS), the user equipment comprising:
a receiver configured to receive, from a network node, a threshold value configuration for configuring a threshold value to be compared with reception quality upon reception of a multicast session in a radio resource control (RRC) inactive state, the threshold value being used to determine whether to start an RRC connection resume; and
a controller configured to apply the threshold value configuration such that the reception quality is compared with the threshold value when performing the multicast reception in the RRC inactive state.
